# EUROPEAN PATENT APPLICATION

(11) **EP 4 779 439 A1**
(43) Date of publication of application: **22.07.2026**
(21) Application number: 25152183.7
(22) Date of filing: 16.01.2025
(51) Int. Cl.: G06F 3/01, G06F 3/03

(54) **TOUCHLESS GESTURE INTERACTION FOR ENHANCED USER ENGAGEMENT WITH DISPLAYED CONTENT**

(71) Applicant: AMERIA AG, 69124 Heidelberg (DE)
(72) Inventor: Vilkhovyi, Ihor, 69221 Dossenheim (DE)
(74) Representative: Best, Bastian

(57) **Abstract**

According to a first aspect of the present invention, it may be provided a method for touchless gesture interaction between a user and content elements. The method may be computer-implemented. The content elements may be displayed on a display means. The method may comprise generating a virtual function layer. The virtual function layer may be associated with the content elements displayed on the display means. The virtual function layer may be configured to associate functions with the content elements. It may be provided that the method comprises analyzing the content elements to determine respective context information. The method may comprise adding at least one function to the virtual function layer, the at least one function being associated with at least one of the content elements based on the respective context information. The at least one function may be associated with a respective touchless gesture input. It may be provided that the method comprises receiving a touchless gesture input, provided by the user using an input object, directed to the at least one content element. The method may comprise executing the at least one function associated with the received touchless gesture input based on the at least one content element and based on the respective context information.

## Description

### TECHNICAL FIELD

The present invention relates to the field of human-computer interaction, specifically to touchless gesture interaction systems. More particularly, it involves methods and systems for enabling users to interact with content elements displayed on a screen through touchless gestures, enhancing user engagement and interaction efficiency. The invention includes but is not limited to computing devices, electronic displays, and interactive systems.

### BACKGROUND

In the field of human-computer interaction, it is common to employ touch-based interfaces such as touchscreens and touchpads. These interfaces allow users to interact with digital content by physically touching the display or input surface. While touch-based systems have become ubiquitous, they have inherent limitations, including issues related to hygiene, limited interaction dimensions, physical wear and tear on the devices, and user experience and health.

Known systems typically involve the use of touch-sensitive surfaces or devices equipped with haptic feedback mechanisms to simulate physical interactions. The accuracy and responsiveness of these systems can be affected by factors such as the user's touch pressure and the surface condition of the touch-sensitive area. Despite the substantial advances in the field of touch-based interaction, there remains a need for more advanced and versatile interaction methods that do not rely on physical contact.

Touchless interaction systems have emerged as a promising alternative, allowing users to interact with virtual objects through gestures and movements without the need for direct contact. However, existing touchless systems often face challenges related to accurately capturing and interpreting complex gestures, as well as providing realistic and responsive feedback to the user and the high need for computational resources and energy. Current touchless interaction systems typically utilize sensor technologies such as cameras or ultrasound to capture and estimate the pose of a user's hand including movements. These systems usually have a relatively high computational resource and energy consumption and at the same time not providing sufficient accuracy and realism of an interaction. Moreover, existing touchless interaction systems are often difficult to be understood by users and lack the ability to provide user guidance.

It is therefore a technical problem underlying the present invention to provide a method for touchless interaction that at least partially overcomes the disadvantages of known systems.

### SUMMARY OF THE INVENTION

The problem is solved by the subject-matter defined in the independent claims. Advantageous modifications of embodiments of the invention are defined in the dependent claims as well as in the description and the figures.

According to a first aspect of the present invention, it may be provided a method for touchless gesture interaction between a user and content elements. The method may be computer-implemented. The content elements may be displayed on a display means. The method may comprise generating a virtual function layer. The virtual function layer may be associated with the content elements displayed on the display means. The virtual function layer may be configured to associate functions with the content elements. It may be provided that the method comprises analyzing the content elements to determine respective context information. The method may comprise adding at least one function to the virtual function layer, the at least one function being associated with at least one of the content elements based on the respective context information. The at least one function may be associated with a respective touchless gesture input. It may be provided that the method comprises receiving a touchless gesture input, provided by the user using an input object, directed to the at least one content element. The method may comprise executing the at least one function associated with the received touchless gesture input based on the at least one content element and based on the respective context information.

The method may be performed by an electronic device, in particular a laptop device. Receiving touchless gesture input may be performed using a touchless interaction system.

The present invention includes various technical advantages, such as enhanced user convenience, providing context-aware functionality, providing dynamic and adaptive interaction, providing improved accuracy and responsiveness, and providing versatile and customizable user interaction.

The technical advantage of enhanced user convenience is achieved through the use of touchless gesture input. By allowing users to interact with content elements without physically touching the display means, the system may offer greater convenience, as users can perform actions with simple gestures. Such action may be more complex that what can be achieved by using traditional input devices, such as keyboards or mice. Further, even when their hands are occupied or when wearing gloves, touchless interaction is possible.

The technical advantage of context-aware functionality is achieved through analyzing the content elements to determine respective context information. By, in particular automatically, analyzing attributes such as text, images, shapes, and other relevant features, the system can gather detailed context information about the displayed content. This may enable the system to provide functions that are highly relevant and meaningful to the user and/or that are more complex than functions that can be triggered by traditional input devices, e.g., by involving several steps. For example, if the content element is a text passage, the system might identify keywords and offer functions such as translating the text, searching for related information, or summarizing the content. If the content element is an image, the system might recognize objects within the image and offer functions such as searching for similar images, providing additional information about the objects, or enhancing the image quality. This context-aware functionality ensures that the user is presented with actions that are directly applicable to the content they are interacting with, thereby enhancing the overall user experience and making interactions more intuitive and efficient.

The technical advantage of dynamic and adaptive interaction is achieved through generating a virtual function layer associated with the content elements. This virtual function layer may be designed to be flexible and responsive, dynamically adapting to changes in the displayed content. As the content on the display means changes, the virtual function layer may update in real-time to ensure that the associated functions remain relevant and appropriate. For example, if a user is browsing through a photo gallery, the virtual function layer can adapt to each new image displayed, offering functions such as optimizing the photo, searching for similar images, or sharing the photo on social media. Similarly, if the user is reading a document, the virtual function layer can update to provide functions like translating text, highlighting key points, or adding annotations. This dynamic adaptability ensures that the system remains useful and effective regardless of the content being displayed, providing a seamless and intuitive interaction experience for the user.

The technical advantage of improved accuracy and responsiveness is achieved through adding at least one function to the virtual function layer based on the respective context information. By associating functions with content elements in a contextually relevant manner, the system ensures that the actions triggered by touchless gesture inputs are precise and aligned with the user's intentions. This reduces the likelihood of errors or unintended actions, enhancing the overall reliability of the interaction. For example, when a user performs a gesture to interact with a specific content element, the system accurately interprets the gesture and executes the function that is most relevant to the context of that element. This might involve opening a detailed view of an image, initiating a search based on a highlighted text phrase, or activating a multimedia playback control. The system's responsiveness is further enhanced by its ability to quickly process gesture inputs and execute the associated functions, providing users with a smooth and efficient interaction experience.

Further, the method is highly versatile and customizable for user interactions, in particular when executing the at least one function associated with the received touchless gesture input. The method may allow users to perform a wide range of actions through touchless gestures, which can be tailored to their specific preferences and needs. The system may support various types of gestures, including hand poses, hand movements, and finger gestures, providing a rich set of interaction possibilities. For example, users can customize gestures to perform specific functions such as zooming in on an image with a pinch gesture, scrolling through a document with a swipe gesture, or selecting an item with a pointing gesture. This versatility enables users to interact with content in a way that feels natural and intuitive to them. Additionally, the ability to customize gestures allows users to create a personalized interaction experience, enhancing their overall satisfaction and engagement with the system. This flexibility is particularly valuable in diverse application scenarios, from professional environments where efficiency is key to entertainment settings where an immersive experience is desired.

It may be provided that the method comprises displaying a virtual representation of the input object being superimposed on the displayed content elements. It may be further provided that the method comprises displaying the virtual representation of the input object by a secondary display means.

By displaying a virtual representation of the input object being superimposed on the displayed content elements, the visual feedback to the user is enhanced in terms of user guidance. By providing a real-time visualization of the user's gestures, the system may give users immediate feedback on their interactions. This visual cue helps users understand how their gestures are being interpreted by the system, which in turn improves their accuracy and confidence when interacting with the content. For example, as a user moves their hand to select an item on the screen, the virtual representation can show the exact position and movement of their hand, allowing them to make precise adjustments as needed. This feedback loop is crucial for ensuring that users can effectively control the system and achieve their desired outcomes without frustration or repeated attempts.

By displaying the virtual representation of the input object by a secondary display means, the spatial awareness is improved. By providing an additional perspective on the user's gestures, the secondary display may enhance the user's understanding of the spatial relationship between their input object and the content elements. This can be particularly beneficial in complex interaction scenarios where precise control is required. For example, a secondary display could show a magnified view of the user's hand movements, helping them to accurately position their gestures relative to small or densely packed content elements on the primary display. This additional visual context reduces the likelihood of errors and improves the precision of the user's interactions, making the system more intuitive and effective to use.

Further, screen clutter may be reduced by offloading the visual feedback to a secondary display, the primary display remains uncluttered and focused on the main content elements. This separation of visual information allows users to concentrate on the primary tasks without distractions from additional overlays or feedback elements. For example, in a multitasking environment, the primary display can show a document or application interface, while the secondary display provides real-time feedback on the user's gestures. This arrangement ensures that the user's attention is not divided, leading to a more streamlined and efficient interaction experience. Additionally, reducing screen clutter can enhance the overall aesthetic and usability of the interface, making it more pleasant and easier to navigate.

It may be further provided that the virtual representation of the input object is a schematic depiction of the input object having a shape being different from the actual shape of the input object.

The feature of having the virtual representation of the input object as a schematic depiction with a shape different from the actual shape of the input object provides a simplified and intuitive visualization. By abstracting the input object's form, the system presents a clear and straightforward representation that users can easily interpret. This simplification may help users to focus on the essential aspects of their interactions without being distracted by unnecessary details. For example, a schematic depiction of a hand might use basic geometric shapes to represent finger positions, allowing users to quickly understand how their gestures are being tracked and interpreted by the system. This intuitive visualization enhances the overall user experience by making interactions more accessible and less cognitively demanding.

Further, this emphasizes the relevant features of the input object that are important for interaction. By abstracting the input object's form, the system can highlight key aspects such as the position and movement of fingers or the direction of a gesture, while omitting extraneous details. This focused representation reduces visual clutter and helps users concentrate on the critical elements of their interactions. For example, a schematic depiction of a hand might use simple lines and circles to indicate finger positions and movements, making it easier for users to see how their gestures are being interpreted. This enhanced focus on relevant features improves the overall user experience by providing clear and meaningful visual feedback.

Further, by aiming for a simplified virtual representation of the input object, the requirements for the captured data quality and/or precision and/or degree of detail may also be reduced thereby also reducing the required computational load. In addition, the computational load required to render detailed representations may be reduced by simplifying the visual depiction. The system may allocate fewer resources to rendering complex graphics, leading to improved performance and responsiveness. For example, instead of generating a highly detailed 3D model of a user's hand, the system can use basic geometric shapes to represent the hand's position and movements. On the other hand, captured data with less detail may be sufficient. The reduction in computational complexity allows the system to process gestures more quickly and efficiently, resulting in a smoother and more responsive user experience. Improved system performance is particularly beneficial in real-time interaction scenarios, where delays or lag can significantly impact the effectiveness of the touchless gesture interface.

It may be provided that the method further comprises providing visual feedback indicating a spatial relationship between the detected input object and the virtual function layer. It may be further provided that the visual feedback is optionally displayed by the display means and/or by a secondary display means.

The feature of providing visual feedback indicating a spatial relationship between the detected input object and the virtual function layer may enhance the accuracy of user interactions. By clearly indicating the position and movement of the input object relative to the content elements, the system may help users make precise adjustments to their gestures. For example, if a user is attempting to select a small icon on the screen, the visual feedback can show the exact proximity and alignment of their hand or stylus, allowing them to fine-tune their movements for accurate selection. This immediate and clear feedback reduces the likelihood of errors and ensures that users can interact with the system effectively, achieving their intended actions with greater precision.

Further, this increases user understanding and control over the system. By offering intuitive visual cues about their gestures, the system helps users comprehend how their movements are being interpreted and how they affect the content elements. For example, as a user moves their hand closer to a content element, the visual feedback might highlight the element or display a proximity indicator, showing the user that their gesture is being recognized and processed. This enhanced understanding empowers users to interact with the system more confidently and accurately, as they can see the immediate impact of their gestures and adjust their actions accordingly. The clear and responsive visual feedback fosters a more intuitive and satisfying user experience.

The feature of the visual feedback optionally being displayed by the display means and/or by a secondary display means offers flexibility in how visual feedback is presented. This flexibility allows for customization based on user preferences and specific application scenarios. For instance, in a multitasking environment, visual feedback can be shown on a secondary display to keep the primary display focused on the main content, reducing clutter and distraction. Alternatively, in situations where a secondary display is not available or already occupied by other content, the feedback can be integrated into the primary display, ensuring that users still receive the necessary visual cues. This adaptability ensures that the system can be tailored to different user needs and contexts, enhancing the overall usability and effectiveness of the touchless gesture interface.

It may be further provided that providing visual feedback comprises generating a visual alert when the detected input object approaches within a predetermined distance of the display means. It may be further provided that the visual alert optionally includes a change of color of the visual feedback.

The feature of generating a visual alert when the detected input object approaches within a predetermined distance of the display means significantly enhances user interaction with the system. By providing a clear indication when the input object is within the active range, the system may increase user awareness of the interaction zone. This awareness may help users understand when their gestures are being recognized and processed, allowing them to adjust their actions accordingly. For example, as a user's hand moves closer to the screen, a visual alert might be triggered, such as a highlighted border or a flashing icon, signaling that the hand is now within the interaction zone. This feedback is particularly useful in preventing unintentional interactions and improving the overall accuracy of the touchless gesture interface.

Additionally, the visual alert may include a change of color of the visual feedback, providing enhanced visual cues that are clear and immediate. This change in color serves as an intuitive signal that is easily interpreted by users, making it easier for them to understand the system's responses to their gestures. For instance, the system might change the feedback color from green to red as the input object approaches the display, indicating proximity to the interaction threshold. This immediate visual cue helps users fine-tune their gestures, ensuring they are within the optimal range for interaction.

Overall, these features work together to improve interaction precision by helping users make precise adjustments to their gestures. The combination of increased interaction awareness and enhanced visual cues leads to more effective control and a more satisfying user experience with the touchless gesture interface.

It may be provided that the visual feedback includes an indication of available functions for a content element when the user's input object hovers over or near the content element.

The feature of providing visual feedback that includes an indication of available functions for a content element when the user's input object hovers over or near the content element may offer several technical advantages that enhance the overall user experience. Firstly, it may provide enhanced user guidance by clearly showing the actions that can be performed on each content element. This guidance may make the system more intuitive and user-friendly, as users can easily understand the interactive possibilities available to them. For example, when a user's hand hovers over a text element, icons or tooltips might appear, indicating options such as translating, highlighting, or copying the text. This immediate feedback helps users navigate the system with confidence.

Secondly, the indication of available functions may improve interaction efficiency by helping users quickly identify and access the functions they need. By displaying relevant options as soon as the input object hovers near a content element, the system reduces the time and effort required for users to find and execute desired actions. This streamlined interaction process allows users to accomplish tasks more swiftly and effectively, enhancing productivity and satisfaction.

Lastly, the feature may ensure context-aware functionality by presenting functions that are specifically relevant to the content element being interacted with. This relevance may enhance the overall interaction experience, as users are provided with options that are meaningful and appropriate for the content they are engaging with. For instance, hovering over an image might reveal options for zooming, editing, or sharing, tailored to the nature of the content. By aligning available functions with the context of each content element, the system delivers a more personalized and effective user experience.

It may be provided that the indication of available functions includes displaying icons or text labels representing available functions near the content element. It may be further provided that the method provides a tutorial mode that guides the user through the available touchless gesture inputs and their associated functions for different types of content elements.

Displaying icons or text labels representing available functions near the content element provides clear and intuitive communication of available functions. By using easily recognizable graphical symbols and descriptive text, the system may help users quickly understand the actions they can perform. For example, an icon of a magnifying glass might indicate a zoom function, while a text label such as "Translate" clearly describes the action of translating text. This combination of visual and textual cues ensures that users can easily identify and access the functions they need, making the system more accessible and user-friendly. The intuitive presentation of available options reduces the learning curve for new users and enhances the overall efficiency of interactions.

Providing a tutorial mode that guides the user through the available touchless gesture inputs and their associated functions for different types of content elements enhances user learning and proficiency. The tutorial mode may offer step-by-step instructions and demonstrations, helping users learn how to perform specific gestures and understand the actions they trigger. For instance, the tutorial mode might show users how to use a swipe gesture to scroll through a document or a pinch gesture to zoom in on an image. By providing a comprehensive and engaging learning experience, the tutorial mode helps users quickly become adept at using the touchless gesture interface, improving their overall confidence and effectiveness. This guided approach ensures that users can fully leverage the capabilities of the system, regardless of their prior experience with touchless technology.

The combination of icons, text labels, and tutorial mode improves the overall user experience by providing a comprehensive and user-friendly interface that supports both novice and experienced users. The clear communication of available functions, coupled with guided learning, may ensure that users can navigate and interact with the system effectively, regardless of their familiarity with touchless gesture technology. This holistic approach to user interface design may enhance the overall usability and satisfaction of the touchless gesture interaction system. By addressing different user needs and preferences, the system may deliver a seamless and enjoyable interaction experience, encouraging continued use and exploration of its features.

It may be provided that the method further comprises automatically targeting by redirecting an imprecise touchless gesture input to a nearest content element.

Automatically targeting by redirecting an imprecise touchless gesture input to a nearest content element may enhance the overall user experience and functionality of the touchless gesture interaction system. Firstly, it may improve interaction accuracy by correcting imprecise gestures, ensuring that the intended content element is selected. This automatic redirection may help users achieve their desired actions even when their gestures are not perfectly aligned with the target. For example, if a user's hand gesture is slightly off-target, the system can intelligently redirect the input to the nearest content element, reducing the likelihood of errors and enhancing the precision of interactions.

Secondly, this may enhance the user experience by providing a smoother and more satisfying interaction process. By reducing frustration and errors associated with imprecise gestures, users can interact with the system more confidently and effectively. The automatic targeting mechanism may ensure that users do not have to repeatedly attempt gestures to achieve their desired outcomes, leading to a more seamless and enjoyable experience.

Lastly, the feature may increase interaction efficiency by minimizing the need for repeated gestures. By automatically redirecting imprecise inputs, users can achieve their desired actions more quickly, without the need for additional adjustments or corrections. This efficiency may be particularly beneficial in scenarios where speed and accuracy are critical, allowing users to navigate and interact with content elements swiftly and effectively. Overall, the automatic targeting feature may significantly enhance the usability and effectiveness of the touchless gesture interaction system.

It may be provided that the functions added to the content elements go beyond a function of clicking on the content elements. It may be further provided that the functions include one or more of: accessing additional information related to the content element, performing a search based on the content element, sharing the content element through a communication application, and/or saving the content element for later reference.

The feature of adding functions to the content elements that go beyond a function of clicking on the content elements may provide a high usage efficiency at runtime. By offering a richer set of interactions, the system may allow users to perform more complex and meaningful actions with less input steps to be taken. For example, instead of merely clicking on a text element, copying the text element, inserting the text element and running a search engine, users may trigger displaying additional information and perform searches by preferably one touchless user input. Other examples may include sharing content and/or save content for later reference. This expanded functionality may enhance the overall user experience by enabling more sophisticated and valuable interactions with the content.

Additionally, the inclusion of functions such as accessing additional information, performing a search, sharing through a communication application, and saving for later reference may improve user engagement. These functions may be directly relevant to the content, making interactions more valuable and informative. For instance, users may quickly find related articles, share interesting content with others, or save important information for future use. This relevance and utility increase user satisfaction and encourage more frequent and meaningful interactions with the system.

Lastly, the versatility of the system may be enhanced by supporting a wide range of actions, catering to different user needs and preferences. By providing various functions that address different aspects of content interaction, the system may become more adaptable and useful in diverse scenarios. Whether users need to gather more information, communicate with others, or organize their content, the system offers the necessary tools to meet these needs. This versatility ensures that the system can accommodate a broad spectrum of user requirements, making it a more effective and valuable tool for touchless gesture interaction.

It may be provided that analyzing the content elements to determine respective context information and/or adding at least one function to at least one of the content elements based on the respective context information is performed by at least one machine-learning model.

The feature of analyzing the content elements to determine respective context information using at least one machine-learning model may enhance the accuracy and depth of context analysis. Machine-learning models are capable of processing vast amounts of data and identifying intricate patterns that may not be apparent through traditional methods. By leveraging these models, the system can perform detailed and precise analyses of content elements, such as text, images, and shapes. For example, a natural language processing model can extract nuanced information from text, such as sentiment, key phrases, and topics, while a computer vision model can recognize objects, scenes, and facial expressions in images. This intelligent context analysis ensures that the functions associated with each content element are highly relevant and tailored to the specific context, improving the overall effectiveness and user experience of the touchless gesture interface.

The feature of adding at least one function to at least one of the content elements based on the respective context information using at least one machine-learning model may allow for adaptive and personalized interactions. Machine-learning models may dynamically update the functions associated with content elements as new data becomes available or as the content changes. This adaptability may ensure that the system remains responsive to the user's needs and preferences. For example, if a user frequently interacts with certain types of content, the machine-learning model can learn these patterns and prioritize relevant functions for similar content in the future. Additionally, the system can personalize interactions by tailoring functions based on the user's behavior and context. This dynamic and personalized approach enhances the overall user experience, making the touchless gesture interface more intuitive and effective.

Using at least one machine-learning model for context analysis and function association may increase system efficiency and scalability by automating complex analyses and decision-making processes. Machine-learning models can handle large volumes of data and perform intricate analyses much faster and more accurately than manual methods. This automation reduces the need for manual configuration and intervention, allowing the system to operate more efficiently. For example, the machine-learning model can continuously analyze new content elements and update their associated functions in real-time, without requiring manual adjustments. This capability ensures that the system can scale to accommodate a growing number of content elements and users, maintaining high performance and responsiveness. By leveraging machine-learning models, the system can efficiently manage and process complex interactions, providing a seamless and scalable touchless gesture interface.

To effectively integrate machine-learning capabilities into the touchless gesture interaction system, a training process for the model may be needed to enable the machine-learning model to accurately analyze content elements and determine their respective context information. The training of such a machine-learning model may include the collection of a comprehensive dataset that includes a diverse array of content elements, such as images, text, and multimedia content, each paired with its context information. This context information might encompass metadata, user interaction history, and relevance scores, providing a rich foundation for the model to learn from.

Once the dataset is prepared, the next step may involve extracting relevant features from the content elements. For instance, in the case of image content, features such as color, texture, shape, and detected objects may be relevant. For text content, the focus shifts to keywords, sentiment, and topics, while multimedia content may require attention to audio and video characteristics. This feature extraction is pivotal in transforming raw data into a format that the machine-learning model can process effectively.

Selecting an appropriate machine-learning model architecture is crucial to handling the complexity of the task. Convolutional Neural Networks (CNNs) are particularly well-suited for image data due to their ability to capture spatial hierarchies in images, making them ideal for tasks involving visual content elements. For textual data, Recurrent Neural Networks (RNNs), or more advanced architectures like Transformers, can be employed to capture sequential dependencies and contextual nuances in text. These models are suitable for understanding the flow and context of language, making them suitable for analyzing text-based content elements.

It may be provided that at least two machine-learning models are provided, wherein for a particular content element, a suitable machine-learning model is selected and used to extract the context and preferably to define the functions.

The training process may involve feeding the extracted features and their corresponding context information into the chosen model. The model may learn to map features to context through iterative optimization. This process aims to minimize the error between the model's predictions and the actual context information in the dataset. Throughout training, the model's performance may be validated using a separate validation dataset to ensure it generalizes well to unseen data.

After an initial training phase, the model's accuracy and generalization capabilities may be evaluated using a test dataset. Based on these evaluations, the model may be fine-tuned by adjusting hyperparameters, incorporating regularization techniques, or expanding the training dataset to enhance its performance.

The training data itself should ideally be diverse and representative of the various scenarios the system may encounter. For image data, a large collection of images depicting different content elements, such as products or advertisements, may be necessary, each labeled with context information like category or relevance. Text data may include a variety of articles, reviews, and descriptions, annotated with sentiment and keywords. Multimedia data, encompassing videos and audio clips, may be labeled with engagement metrics and relevance scores. Additionally, user interaction data, capturing gestures, clicks, and navigation patterns, provides valuable insights into user behavior and preferences, further enriching the training dataset.

To enable the machine-learning model to add at least one function to content elements based on their respective context information, the training data ideally included a wide range of user interaction scenarios, user intents and/or content scenarios. Said dataset may include various types of content elements, such as images, text, and multimedia, each annotated with detailed context information. For instance, images might be labeled with categories, relevance scores, and user interaction history, while text elements could be tagged with keywords, sentiment, and topic information. Multimedia content, such as videos and audio clips, could be annotated with visual and audio features, user engagement metrics, and relevance scores. Additionally, user interaction data, including gestures, clicks, and dwell time, could be collected to provide insights into how users interact with different content elements. This comprehensive dataset ensures that the machine-learning model can learn to recognize patterns and associations between content elements and their context, enabling it to dynamically assign appropriate functions.

The training process for the machine-learning model may involve several key steps. Initially, the collected dataset undergoes a feature extraction phase, where relevant attributes of the content elements are identified and quantified. For image data, this might involve extracting visual features such as color, texture, and shape, while for text data, it could include identifying keywords, sentiment, and topics. Multimedia content may require extracting both visual and audio features. These extracted features may serve as the input for the machine-learning model. The model, which could be a Convolutional Neural Network (CNN) for image data or a Recurrent Neural Network (RNN) for text data, is then trained to map these features to the respective context information. This training may be performed using supervised learning techniques, where the model learns to minimize the error between its predictions and the actual context information in the labeled dataset. The training process may be iterative, with the model being continuously refined and validated using a separate validation dataset to ensure it generalizes well to new, unseen data.

Once the initial training is complete, the model's performance is evaluated using a test dataset that was not used during training. This evaluation may belp assess the model's accuracy and generalization capabilities. Based on the evaluation results, the model may be fine-tuned by adjusting hyperparameters, incorporating regularization techniques, or expanding the training dataset to improve performance. The final trained model is then capable of analyzing new content elements, determining their context information, and dynamically adding appropriate functions based on this context. For example, if the model identifies a content element as a product image with high user engagement, it might add functions such as "search for similar products" or "find lower prices." This dynamic assignment of functions enhances the touchless interaction system's ability to provide a responsive and intuitive user experience, leveraging the power of machine learning to adapt to various content and user interaction scenarios.

It may be provided that several machine-learning models are used, e.g., one or more for extracting context information of content elements, and one or more for associating functions to the content elements based on the extracted context information. In that sense, in one embodiment of the present disclosure, the output of a first machine-learning model may be the input of a second machine-learning model, while the first machine-learning model extracts the context and the second machine-learning model adds the functions.

It may be provided that the virtual function layer is adaptive and dynamically updates the functions and associated touchless gesture inputs based on changes in the content elements displayed by the display means.

Having an adaptive virtual function layer that dynamically updates the functions and associated touchless gesture inputs based on changes in the content elements displayed by the display means may offer several technical advantages. Firstly, it may provide real-time responsiveness to changes in content, ensuring that the functions and gesture inputs remain relevant and up-to-date. As new content elements are displayed or existing ones are modified, the virtual function layer can immediately adjust the associated functions and gestures to match the new context. This real-time adaptability ensures that users always have access to the most appropriate and effective interactions, enhancing the overall efficiency and accuracy of the system.

Secondly, the user experience may be improved by offering a seamless and intuitive interaction that adapts to the evolving content. Users can interact with the system without interruption, as the virtual function layer continuously updates to reflect the current state of the content. For example, if a user switches from viewing a document to browsing a photo gallery, the system can automatically update the available functions and gestures to suit the new content type. This seamless transition between different interaction scenarios makes the system more intuitive and user-friendly, reducing the learning curve and increasing user satisfaction.

Lastly, the adaptive and dynamic nature of the virtual function layer may increase system flexibility by allowing it to accommodate a wide range of content types and interaction scenarios. Whether users are interacting with text, images, videos, or other multimedia elements, the system can adjust its functions and gestures to provide the most relevant and effective interactions. This flexibility ensures that the system can be used in diverse applications and environments, making it a versatile tool for touchless gesture interaction. By supporting a broad spectrum of content and interaction types, the system can meet the varied needs and preferences of different users, enhancing its overall utility and appeal.

It may be provided that the touchless gesture inputs include one or more hand poses, one or more hand movements and/or one or more finger gestures. It may be further provided that the touchless gesture inputs optionally include a combination of one or more hand poses, one or more hand movements and/or one or more finger gestures. It may be further provided that the touchless gesture inputs associated with functions are customizable by the user.

The feature of including touchless gesture inputs that encompass one or more hand poses, hand movements, and/or finger gestures may provide enhanced interaction versatility. By supporting a wide range of gestures, the system may allow users to perform various actions intuitively and naturally. This versatility means that users can choose gestures that feel most comfortable and efficient for them, whether it's a swipe to navigate through content, a pinch to zoom, or a specific hand pose to activate a function. The ability to recognize and interpret diverse gestures ensures that the system can accommodate different interaction scenarios and user preferences, making it a flexible and adaptable tool for touchless interaction.

The feature of allowing touchless gesture inputs associated with functions to be customizable by the user may enable a personalized user experience. By providing users with the ability to define and modify the gestures linked to specific functions, the system may empower them to tailor their interaction experience to their individual preferences and needs. This customization can enhance user satisfaction and engagement, as users can configure the system to align with their natural interaction styles. For example, a user might prefer a circular hand movement for scrolling, while another might choose a simple swipe. This personalization ensures that the system is intuitive and user-friendly, catering to the unique preferences of each user.

The feature of including a combination of one or more hand poses, hand movements, and/or finger gestures improves accessibility by offering multiple ways to perform actions. This flexibility accommodates users with different abilities and interaction styles, ensuring that the system is accessible to a broad audience. For instance, users with limited dexterity might find certain hand poses easier to perform than complex movements, while others might prefer finger gestures for precision. By providing various gesture options, the system can support users with diverse needs, making the touchless gesture interface more inclusive and adaptable to different user requirements. This improved accessibility enhances the overall usability and appeal of the system.

According to a second aspect of the present invention, it may be provided a data processing apparatus, preferably an electronic device, more preferably a computer device, comprising means for carrying out the method of the first aspect of the present invention.

It may be provided that the data processing apparatus is a laptop device comprising an upper portion and a lower portion each being hingedly connected to each other, wherein the upper portion includes the display means and the lower portion includes a secondary display means.

According to a third aspect of the present invention, it may be provided a computer program or a computer-readable medium having stored thereon the computer program, the computer program comprising instructions which, when the computer program is executed by a data processing apparatus, cause the data processing apparatus to carry out the method of the first aspect of the present invention.

The terms used herein should generally be construed as understood by the average person skilled in the art, unless explicitly indicated otherwise. The following explanations may guide the understanding:
Throughout the present disclosure, the term "content elements" may refer to the individual components or items of digital content that are displayed on a display means. These elements can include text, images, videos, icons, buttons, and other graphical or multimedia items. Content elements are the primary objects with which users interact through the touchless gesture system. For example, content elements may include a paragraph of text in a document, an image in a photo gallery, a video thumbnail on a streaming platform, or an interactive button on a user interface. Each content element may have specific functions associated with it, enabling users to perform various actions through touchless gestures.

Throughout the present disclosure, the term "virtual function layer" may refer to an abstract layer that is superimposed over the content elements displayed on a display means. This layer may be invisible to the user but may serve as an intermediary that associates specific functions with the content elements. The virtual function layer may be a virtual layer which can be defined in an interaction space in front of the display means having a distance from the display means and being essentially parallel to the display means. The virtual function layer may dynamically adapt to changes in the displayed content and can be configured to respond to various touchless gesture inputs. For example, in a graphical user interface, the virtual function layer may map gestures to advanced actions such as searching the web for similar images or information, rephrasing or translating text, optimizing a photo for better quality, or providing contextual recommendations based on the content. These functions go beyond common functionalities achievable with traditional input devices like keyboards or mice, offering enhanced interactivity and user engagement.

Throughout the present disclosure, the term "context information" may refer to the data and metadata that provide an understanding of the environment, characteristics, and relevance of content elements displayed on a display means. This information may be derived from analyzing various attributes of the content elements, such as text, images, shapes, and other relevant features. Context information may include details about the content's purpose, its relationship to other content, and its potential uses. For example, context information may involve identifying keywords within a text, recognizing objects or scenes within an image, or determining the thematic relevance of content based on its visual or textual attributes. This information allows the system to make informed decisions about which functions to associate with each content element, enhancing the user's interaction experience.

Throughout the present disclosure, the term "touchless gesture input" may refer to a method of user interaction where commands are given through gestures made in the air, without physically touching the display means or any input device. These gestures can be detected and interpreted by sensors, cameras, or other input detection systems. Touchless gesture inputs may include a variety of hand poses, hand movements, and finger gestures, such as swiping, pinching, pointing, or waving. For example, a user may perform a swipe gesture in the air to scroll through a document, or a pinch gesture to zoom in on an image. This type of input allows for a more hygienic and intuitive interaction with digital content, as it eliminates the need for physical contact with the device.

Throughout the present disclosure, the term "function" may refer to any specific action or operation or chain of actions that can be performed in response to a touchless gesture input directed at a content element. Functions are associated with content elements through the virtual function layer and are contextually relevant to the content being interacted with. For example, a function may include actions such as translating a text passage, searching for similar images on the web, optimizing a photo for better quality, accessing additional information related to a content element, performing a search based on the content element, sharing the content element through a communication application, or saving the content element for later reference. These functions enhance the interactivity and usability of the system by providing users with a wide range of actions that can be performed without physical contact.

Throughout the present disclosure, the expression "associate functions with the content elements" may refer to the process of linking specific actions or operations to the content elements displayed on a display means. This association is facilitated by the virtual function layer, which injects functions into the regions where the content elements are displayed. The functions may be contextually relevant to the content elements and can be triggered by corresponding touchless gesture inputs. For example, associating functions with content elements may involve linking a text element to actions such as translating or rephrasing the text, linking an image to actions such as searching for similar images on the web or optimizing the photo, and linking a video to actions such as playing, pausing, or sharing the video. This association enhances the interactivity and functionality of the displayed content.

Throughout the present disclosure, the expression "analyzing the content elements" may refer to the process of examining and interpreting various attributes of the content elements displayed on a display means to understand their context and relevance. This analysis may be performed automatically by the system and can include evaluating text, images, shapes, and other characteristics of the content elements. For example, analyzing the content elements may involve extracting keywords from a text passage, recognizing objects or scenes within an image, identifying the geometric properties of shapes, or assessing the thematic content of multimedia elements. The analysis aims to gather context information that informs the association of functions with the content elements, thereby enabling more meaningful and context-aware interactions.

Throughout the present disclosure, the term "input object" may refer to any physical item or part of the user's body that is used to provide touchless gesture inputs to the system. This typically includes the user's hand or fingers but may also encompass other objects such as a stylus, a pen, or any other tool that can be recognized by the input detection system. The input object is detected and tracked by sensors or cameras to interpret the user's gestures and translate them into corresponding actions on the display means. For example, a user may use their hand to perform a swipe gesture or use a stylus to point at a specific content element on the screen.

Throughout the present disclosure, the term "display means" may refer to any device or apparatus capable of visually presenting content elements to a user. This can include a wide range of display technologies such as LCD screens, LED displays, OLED panels, projectors, or any other visual output devices. The display means serves as the interface through which users view and interact with digital content. For example, a display means may be a computer monitor, a television screen, a smartphone display, or a digital signage system. The display means may also support various resolutions and sizes, adapting to different use cases and environments.

Throughout the present disclosure, the term "touchless interaction system" may refer to a hardware and software combination that enables an electronic device to recognize and interpret physical gestures carried out by a user without direct touch. This system may include, for example, cameras, infrared sensors, and other types of detection sensors that are capable of detecting the movement of a user's body parts in free space. Preferably, the sensor means are 3D sensors.

For that, the touchless interaction system preferably includes or consists of sensor means. The sensor means may include one or more sensor devices. Groups of the one or more sensor devices may build a sensor array. An exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total. Further, it may be included a 2D RGB camera for adding color information to the sensor data. It may be provided that 3D image data obtained by 3D camera(s) are combined by 2D RGB image data obtained by a 2D RGB camera. By this, a colored 3D model of the physical input object may be provided making up the virtual representation.

The sensor means may in particular be 3D imaging sensor means which may include sensor devices that are, alone or in combination with other sensor devices, capable of capturing three-dimensional images of an environment, in particular of objects such as a user's hand being the physical input object. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The touchless interaction system may be configured to observe an interaction space comprising or being a 3D space in the nearfield of the electronic device in which the user may provide interaction input, i.e., free-space hand movement. The space may be a space between the user and the electronic device, in particular the display means. Generally, the interaction space may be within or equal to the field of view of the sensor means. The interaction space may have a spatial orientation and/or location that is particularly convenient for the user person for providing touchless interaction, i.e., free-space hand movements. It may be provided that the user is provided with a control option to adjust the spatial orientation and/or location of the interaction space.

The touchless interaction system may receive, in particular from sensor means, sensor data, i.e., data collected by sensor means. The sensor means may preferably include at least one imaging sensor device, as mentioned above, thus in this case, the sensor data includes image data. In a preferred embodiment, the sensor means is configured to capture a 3D image of an interaction space. The 3D image may be generated based on layering various sensor data from different sensor devices. In particular, the sensor means may include a depth sensor, such as at least one infrared sensor, facilitating creation of the 3D image. Said captured sensor data may be processed by the electronic device or computer device in order to generate the virtual representation behaving corresponding to the physical input object which may be the user's hand observed by the touchless interaction system.

Throughout the present disclosure, the term "sensor means" may refer to the components of the touchless interaction system that capture data related to the physical input object. These sensors may include various types of devices capable of detecting different aspects of the physical input object, such as its position, movement, and shape. Specific examples of sensor means may include depth sensors that capture 3D spatial data, infrared cameras that detect heat signatures and movements, and motion capture systems that use multiple cameras to track the precise movements of an object. The sensor means may work in conjunction with software algorithms to process the captured data and generate corresponding virtual representations. The sensor means, in a preferred embodiment, may include at least one 3D camera providing the point cloud and/or voxel cloud and may include at least one 2D color camera, in particular 2D RGB camera, for adding color information to the point cloud and/or voxel cloud. All together may be included in the sensor data facilitating generating the virtual representation of the physical input object.

The "sensor data" may include data captured by the sensor means, representing the movement and shape of the physical input object. This data may be in various formats, such as point clouds, voxel data, or 3D coordinates, depending on the type of sensors used. Specific examples of sensor data may include a series of 3D coordinates representing the position of the physical input object over time, a point cloud and/or voxel cloud generated by a depth camera showing the contours of an object, or the volume and shape of the physical input object. The sensor data may be processed in real-time to generate virtual representations and facilitate touchless interactions.

Throughout the present disclosure, the term "virtual representation of the input object" may refer to a digital depiction or visualization of the input object, such as a user's hand or a stylus, that is displayed on the screen. This representation is superimposed on the content elements, providing users with a visual cue of their interaction with the system. The virtual representation may take various forms, such as a simple outline, a detailed 3D model, or an abstract icon, depending on the application's requirements and the level of detail needed. For example, in a touchless gesture system, the virtual representation might show the position and movement of the user's hand as they navigate through content, helping them understand the spatial relationship between their gestures and the content elements. This visual feedback enhances the user's ability to interact accurately and effectively with the system.

Throughout the present disclosure, the term "secondary display means" may refer to an additional display device or screen that is used to present supplementary information or visual feedback to the user. This secondary display can work in conjunction with the primary display means to enhance the overall user experience. For example, the secondary display means may be a smaller screen on a laptop's keyboard area, an external monitor connected to a computer, or a wearable display such as smart glasses. In the context of the invention, the secondary display means may be used to show the virtual representation of the input object, providing users with an alternative view or additional context for their touchless interactions. This can be particularly useful in scenarios where the primary display is cluttered with content, or where the user needs to see detailed feedback without obstructing the main content.

Throughout the present disclosure, the term "schematic depiction" may refer to a simplified or abstract representation of an object that captures its essential features without replicating its exact appearance. In the context of the invention, a schematic depiction of the input object may present a generalized shape or outline that differs from the actual physical shape of the input object. This abstraction can help to emphasize certain aspects of the input object that are relevant to the interaction while omitting unnecessary details. For example, a schematic depiction of a user's hand might be represented as a simple outline or a set of geometric shapes, such as circles and lines, to indicate the positions and movements of the fingers. This approach can make the virtual representation more intuitive and easier to interpret, especially in complex interaction scenarios. In a preferred embodiment, the schematic depiction is a 2D illustration of a schematic hand of a user.

Throughout the present disclosure, the term "visual feedback" may refer to the visual cues or indicators provided to the user to convey information about their interactions with the system. This feedback helps users understand how their gestures are being interpreted and how they relate to the content elements and functions within the virtual function layer. Visual feedback can take various forms, such as highlighting, color changes, animations, or graphical overlays. For example, when a user moves their hand close to a content element, the system might highlight the element or display a visual indicator showing the proximity of the input object. This feedback ensures that users receive immediate and intuitive information about their interactions, enhancing their ability to control the system effectively.

Throughout the present disclosure, the term "spatial relationship" may refer to the positional and orientational relationship between the detected input object and the virtual function layer. This relationship indicates how the input object, such as a user's hand or a stylus, is positioned relative to the content elements and the associated functions within the virtual function layer. Understanding the spatial relationship is crucial for accurately interpreting the user's gestures and providing appropriate visual feedback. For example, the spatial relationship may involve determining the distance between the input object and a content element, the angle of approach, or the specific region of the virtual function layer that the input object is interacting with. By providing visual feedback that reflects this spatial relationship, the system helps users understand the precise positioning and movement of their gestures, improving the accuracy and effectiveness of their interactions.

Throughout the present disclosure, the term "visual alert" may refer to a visual indication or signal that is generated to draw the user's attention to a specific event or condition. In the context of the invention, a visual alert may be used to notify the user when the detected input object, such as a hand or stylus, approaches within a certain distance of the display means. This alert can take various forms, such as a flashing icon, a highlighted border, or a change in the color of the visual feedback. For example, when a user's hand gets close to the screen, the system might generate a visual alert by changing the color of the feedback from green to red, indicating that the input object is within the active interaction zone. Visual alerts help users understand the spatial relationship between their gestures and the display, enhancing their ability to interact accurately and effectively.

Throughout the present disclosure, the term "predetermined distance" may refer to a specific spatial threshold set by the system to define the proximity at which certain actions or alerts are triggered. This distance is pre-configured based on the desired sensitivity and responsiveness of the touchless gesture interface. In the context of the invention, the predetermined distance determines when a visual alert is generated as the input object approaches the display means. For example, the system might be configured to trigger a visual alert when a user's hand comes within 10 centimeters of the screen, indicating that the input object is entering the active interaction zone. The predetermined distance can be adjusted based on user preferences or specific application requirements, allowing for customization of the interaction experience to suit different contexts and environments.

Throughout the present disclosure, the term "indication of available functions" may refer to the visual cues or signals provided to the user to inform them about the actions or operations that can be performed on a specific content element. This indication is displayed when the user's input object, such as a hand or stylus, hovers over or near the content element. The indication of available functions can take various forms, such as icons, text labels, tooltips, or contextual menus. For example, when a user's hand hovers over a text element, the system might display icons representing actions like translating, highlighting, or copying the text. Similarly, hovering over an image might reveal options for zooming, editing, or sharing the image. This visual feedback helps users understand the interactive possibilities available for each content element, enhancing their ability to navigate and utilize the system effectively.

Throughout the present disclosure, the term "icons" may refer to graphical symbols or images that represent specific functions or actions available to the user. These icons are displayed near the content elements to visually indicate the possible interactions that can be performed. Icons are designed to be intuitive and easily recognizable, helping users quickly understand the available options. For example, an icon of a magnifying glass might represent a zoom function, while a pencil icon could indicate an edit function. By using icons, the system provides a clear and concise way to communicate the available functions, enhancing the user's ability to navigate and interact with the content.

Throughout the present disclosure, the term "text labels" may refer to descriptive words or phrases that accompany icons or stand alone to represent available functions near a content element. These labels provide additional context and clarity, helping users understand the specific actions they can perform. Text labels are typically concise and directly related to the function they describe, such as "Translate," "Share," or "Save." By displaying text labels alongside or instead of icons, the system ensures that users have a clear understanding of the available interactions, even if they are unfamiliar with certain icons. This combination of visual and textual cues enhances the overall accessibility and usability of the system.

Throughout the present disclosure, the term "tutorial mode" may refer to an interactive feature within the system that guides users through the available touchless gesture inputs and their associated functions for different types of content elements. This mode is designed to help users learn and become proficient with the touchless gesture interface by providing step-by-step instructions and demonstrations. The tutorial mode may include visual aids such as animations, highlighted areas, and on-screen prompts that show users how to perform specific gestures and what actions they trigger. For example, the tutorial mode might guide a user through the process of using a swipe gesture to scroll through a document or a pinch gesture to zoom in on an image. By offering a comprehensive and engaging learning experience, the tutorial mode helps users quickly adapt to the touchless interaction system, improving their overall confidence and effectiveness in using the interface.

Throughout the present disclosure, the term "accessing additional information" may refer to the ability of the system to provide users with supplementary data or context related to a specific content element. This function allows users to delve deeper into the content and gain a more comprehensive understanding of its significance or relevance. For example, when interacting with a text element, users might access additional information such as definitions of terms, related articles, or background information. Similarly, for an image or video, the system might provide metadata, descriptions, or links to related content. This capability enhances the user's interaction by offering a richer and more informative experience.

Throughout the present disclosure, the term "performing a search" may refer to the ability of the system to initiate a query based on the content element and retrieve relevant results. This function allows users to explore related information, resources, or content that is connected to the specific element they are interacting with. For example, when a user selects a text passage, the system might perform a search to find related articles, research papers, or web pages. Similarly, for an image, the system might search for visually similar images or related visual content. This functionality enables users to expand their knowledge and discover additional resources that are pertinent to the content element.

Throughout the present disclosure, the term "sharing through a communication application" may refer to the ability of the system to enable users to distribute content elements via various communication platforms. This function allows users to easily share information, images, videos, or other content with others through applications such as email, messaging apps, social media platforms, or collaboration tools. For example, a user might share a text passage via an email, post an image on a social media platform, or send a video link through a messaging app. This capability facilitates seamless communication and collaboration, allowing users to disseminate content quickly and efficiently.

Throughout the present disclosure, the term "saving for later reference" may refer to the ability of the system to allow users to store content elements for future access and review. This function enables users to bookmark or archive information, images, videos, or other content that they wish to revisit at a later time. For example, a user might save a text passage to a reading list, bookmark an image for future inspiration, or archive a video for later viewing. This capability provides users with the convenience of organizing and managing content according to their personal preferences and needs, ensuring that important information is readily accessible whenever required.

Throughout the present disclosure, the term "machine-learning model" may refer to a computational algorithm or system that is designed to learn patterns and make predictions or decisions based on data. Machine-learning models are trained using large datasets and can improve their performance over time as they are exposed to more data. In the context of the invention, a machine-learning model may be used to analyze content elements to determine respective context information and/or to add at least one function to at least one of the content elements based on the respective context information.

Machine-learning models can take various forms, including but not limited to supervised learning models, unsupervised learning models, and reinforcement learning models. Supervised learning models are trained on labeled data, where the input data is paired with the correct output. Examples of supervised learning models include linear regression, decision trees, and neural networks. Unsupervised learning models, on the other hand, are trained on unlabeled data and are used to identify patterns or groupings within the data.

Examples of unsupervised learning models include clustering algorithms and principal component analysis. Reinforcement learning models learn by interacting with an environment and receiving feedback in the form of rewards or penalties.

In the context of the invention, a machine-learning model may be used to automatically analyze various attributes of content elements, such as text, images, shapes, and other characteristics, to determine their context. For example, a natural language processing (NLP) model might be used to analyze text elements to extract keywords, identify topics, or understand the sentiment of the content. Similarly, a computer vision model might be used to analyze images to recognize objects, detect faces, or classify scenes. The context information derived from this analysis can then be used to add relevant functions to the content elements.

The machine-learning model may also be used to dynamically update the functions associated with content elements as new data becomes available or as the content changes. For example, if a new image is added to a gallery, the model can analyze the image and automatically associate functions such as zooming, editing, or sharing based on the detected context. This adaptability ensures that the system remains responsive and relevant to the user's needs.

Overall, the use of machine-learning models in the invention enhances the system's ability to provide context-aware and personalized interactions, making the touchless gesture interface more intelligent and effective.

Throughout the present disclosure, the term "hand poses" may refer to specific static configurations or positions of the hand that are recognized by the system as distinct inputs. These poses can include various arrangements of the fingers and palm, such as an open hand, a closed fist, a pointing finger, or a thumbs-up gesture. Hand poses are used to convey specific commands or actions to the system. For example, an open hand pose might be used to activate a selection mode, while a pointing finger pose could be used to indicate a specific content element. The system detects and interprets these poses to execute the corresponding functions.

Throughout the present disclosure, the term "hand movements" may refer to dynamic motions or gestures made with the hand that are recognized by the system as distinct inputs. These movements can include actions such as swiping, waving, pinching, or rotating the hand. Hand movements are used to perform various commands or actions within the system. For example, a swipe movement might be used to scroll through a document or navigate between images, while a pinching movement could be used to zoom in or out on a content element. The system detects and tracks these movements in real-time, interpreting them to execute the corresponding functions.

Throughout the present disclosure, the term "finger gestures" may refer to specific movements or configurations of one or more fingers that are recognized by the system as distinct inputs. These gestures can include actions such as tapping, flicking, pinching, or spreading fingers. Finger gestures are used to convey precise commands or actions to the system. For example, a tapping gesture might be used to select a content element, while a pinching gesture could be used to zoom in on an image. The system detects and interprets these finger gestures to execute the corresponding functions, allowing for fine-grained control and interaction with the content.

Throughout the present disclosure, the term "customizable gesture inputs" may refer to the ability of the system to allow users to define and modify the touchless gestures associated with specific functions. This customization enables users to tailor the gesture inputs to their personal preferences and interaction styles. For example, a user might choose to use a swipe gesture to scroll through a document, while another user might prefer a circular hand movement for the same function. The system provides an interface for users to configure and save their preferred gestures, ensuring that the interaction experience is personalized and intuitive. Customizable gesture inputs enhance the flexibility and usability of the system, accommodating a wide range of user needs and preferences.

Throughout the present disclosure, the term "laptop device" may refer to a portable computer that typically includes an integrated display screen and keyboard. Laptops are designed for mobile use and can be powered by a battery or an external power supply. They are compact and lightweight, making them convenient for use in various settings, such as at home, in the office, or on the go. A laptop device usually features a clamshell design, with the display screen and keyboard housed in separate sections that can be folded together for portability.

Throughout the present disclosure, the term "hingedly connected" may refer to the mechanical connection between two parts that allows them to pivot or rotate relative to each other. In the context of a laptop device, the upper portion (which includes the display means) and the lower portion (which includes the keyboard and possibly a secondary display means) are hingedly connected. This hinged connection enables the laptop to open and close like a book, allowing the display to be positioned at various angles for comfortable viewing. The hinge mechanism provides stability and flexibility, ensuring that the laptop can be used in different orientations and configurations.

Throughout the present disclosure, the term "upper portion" may refer to the top section of a laptop device that houses the display means. This portion is typically attached to the lower portion via a hinge, allowing it to open and close. The upper portion is primarily responsible for displaying visual content to the user and may include additional components such as a webcam, microphone, or speakers. The display means within the upper portion can vary in size and resolution, providing users with a clear and vibrant visual interface for interacting with digital content.

Throughout the present disclosure, the term "lower portion" may refer to the bottom section of a laptop device that houses the primary input components, such as the keyboard and touchpad. Additionally, the lower portion may include a secondary display means, which provides supplementary visual feedback or additional functionality. The lower portion is hingedly connected to the upper portion, allowing the laptop to open and close. This section typically contains other essential components, such as the battery, storage devices, and various ports for connectivity. The lower portion serves as the main interface for user input and interaction with the laptop device.

Throughout the present disclosure, the term "secondary display means" may refer to an additional display device integrated into the lower portion of a laptop device. This secondary display provides supplementary visual feedback or additional functionality, complementing the primary display located in the upper portion. The secondary display means can be used for various purposes, such as displaying virtual representations of input objects, providing contextual information, or offering quick access to frequently used tools and applications. For example, a secondary display might show a virtual keyboard, control panel, or notification center, enhancing the overall user experience by expanding the available screen real estate and improving multitasking capabilities.

All features, technical implementation details and advantages described with respect to any one of the aspects of the present invention described herein are self-evidently mutatis mutandis applicable for any one of the other aspects of the present invention and vice versa.

### BRIEF DESCRIPTION OF THE DRAWINGS

The disclosure may be better understood by reference to the following drawings:
- Figure 1:: A flow chart including steps in accordance with embodiments of the present disclosure.
- Figure 2: A schematic illustration of an exemplary data processing apparatus according to embodiments of the present disclosure.
- Figure 3: A first schematic usage scene of a method according to embodiments of the present disclosure.
- Figure 4: A second schematic usage scene of a method according to embodiments of the present disclosure.
- Figure 5: A third schematic usage scene of a method according to embodiments of the present disclosure.
- Figure 6: A fourth schematic usage scene of a method according to embodiments of the present disclosure.
- Figure 7: An exemplary illustration of content elements according to embodiments of the present disclosure.
- Figure 8: A fist exemplary illustration of a virtual function layer according to embodiments of the present disclosure.
- Figure 9: A second exemplary illustration of a virtual function layer according to embodiments of the present disclosure.
- Figure 10: An image of a prototype of a data processing apparatus according to embodiments of the present disclosure.

### DETAILED DESCRIPTION

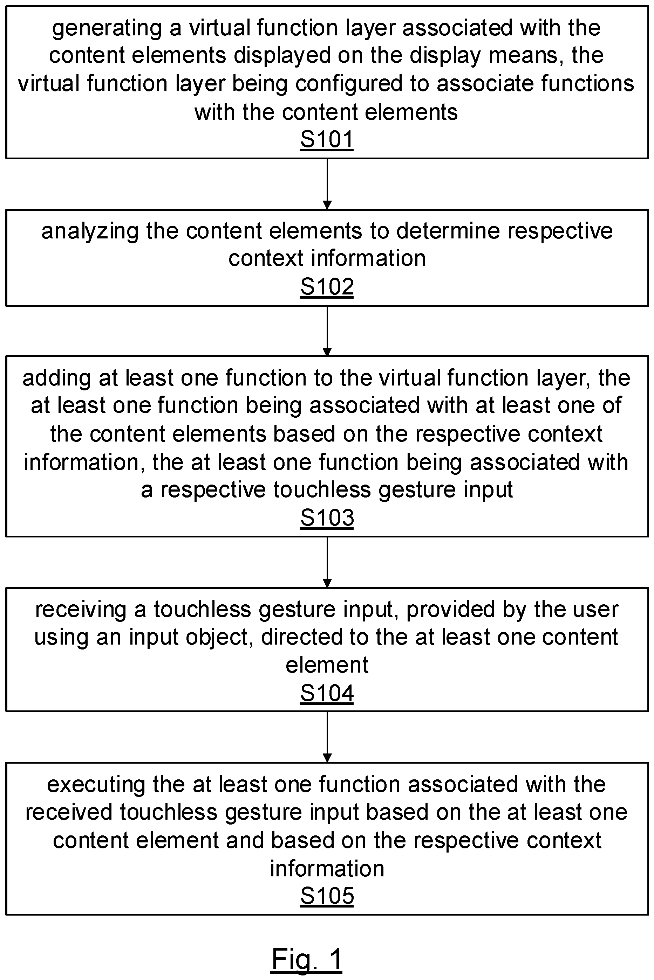

Figure 1 is a flow chart that outlines the steps involved in a method for touchless gesture interaction between a user and content elements 121 displayed on a display means 120 according to one embodiment. The process begins with step S101, which involves generating a virtual function layer 112 associated with the content elements 121 displayed on the display means 120. This virtual function layer 112 is configured to associate specific functions with the content elements 121, creating an interactive layer that responds to user gestures.

In step S102, the content elements 121 are analyzed to determine their respective context information. This analysis involves understanding the attributes and relevance of the content elements 121, which is crucial for associating appropriate functions with them.

Step S103 involves adding at least one function to the virtual function layer 112 based on the context information determined in the previous step. Each function is associated with a respective touchless gesture input, allowing the user to interact with the content elements 121 through gestures.

In step S104, a touchless gesture input provided by the user using an input object (200), such as a hand or stylus, is received. This input is directed towards at least one of the content elements (121), triggering the associated function.

Finally, step S105 includes executing the function associated with the received touchless gesture input based on the content element (121) and the context information. This step completes the interaction process, allowing the user to perform actions on the content elements (121) without physical contact.

This detailed description of Figure 1 provides a comprehensive understanding of the flow of steps involved in the touchless gesture interaction method, highlighting the importance of context analysis and the dynamic association of functions with content elements (121).

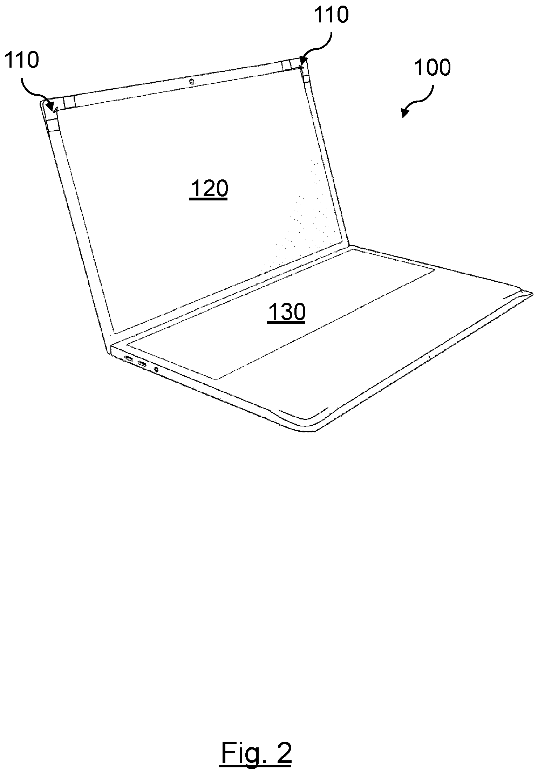

Figure 2 provides a schematic illustration of an exemplary data processing apparatus 100 according to certain embodiments of the present disclosure. In this embodiment, the data processing apparatus 100 is a laptop device, which integrates a touchless interaction system 110 designed to facilitate user interaction with content elements 121 without the need for physical contact.

The laptop device features a display means 120, which serves as the primary interface for displaying content elements 121 to the user. Additionally, a secondary display means 130 is included, which may serve various auxiliary functions such as displaying additional information or providing an extended workspace for the user.

The touchless interaction system 110 is a component of the data processing apparatus 100 enabling the detection and interpretation of user gestures within an interaction space 111. This system is responsible for capturing the movements of an input object 200, such as a user's hand, and translating these movements into commands that interact with the virtual function layer 112 associated with the content elements 121.

The virtual function layer 112 is a conceptual layer that overlays the display means 120, allowing specific functions to be associated with the content elements 121 based on the user's gestures. This layer enhances the interactivity of the laptop device by enabling touchless control over the displayed content.

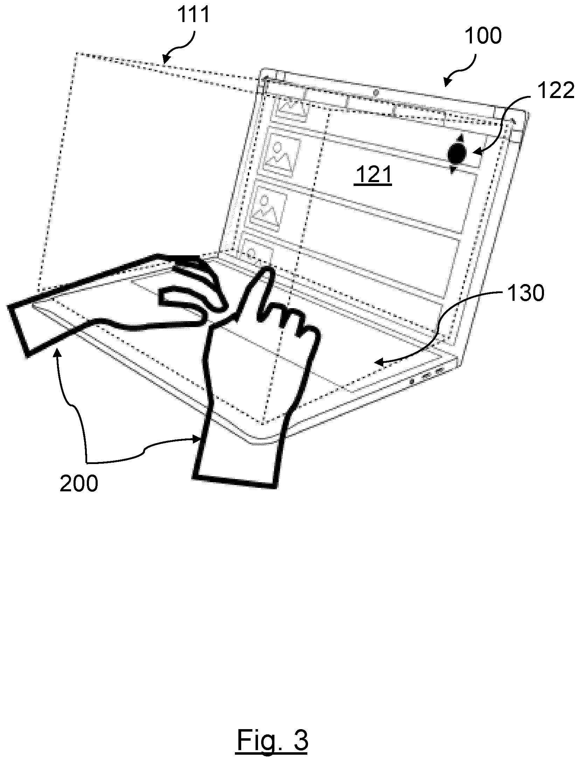

Figure 3 shows a first schematic usage scene of the method according to the embodiments of the present disclosure, with the data processing apparatus 100 being a laptop device, analogously to Figure 2. In this figure, the interaction space 111 is depicted with dotted lines, illustrating the area within which the touchless interaction system 110 can detect and interpret touchless gesture input. In particular, the touchless interaction system 110 captures the interaction space 111, enabling it to monitor and respond to the movements of an input object 200, such as a user's hand.

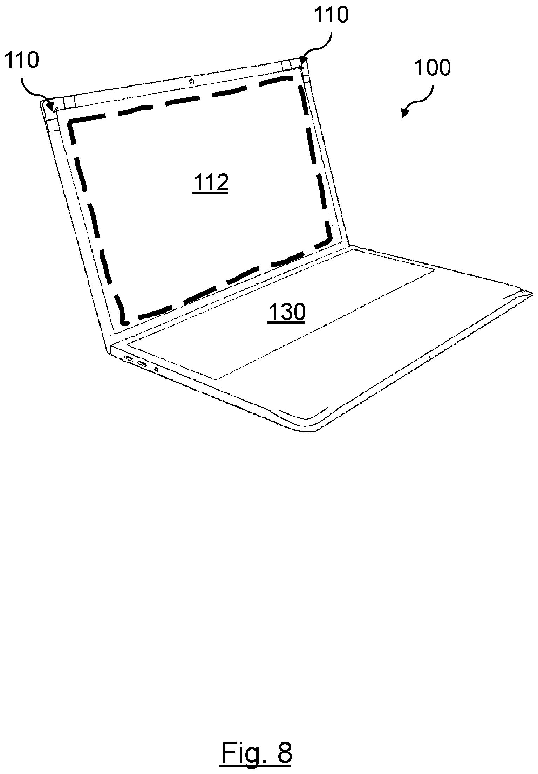

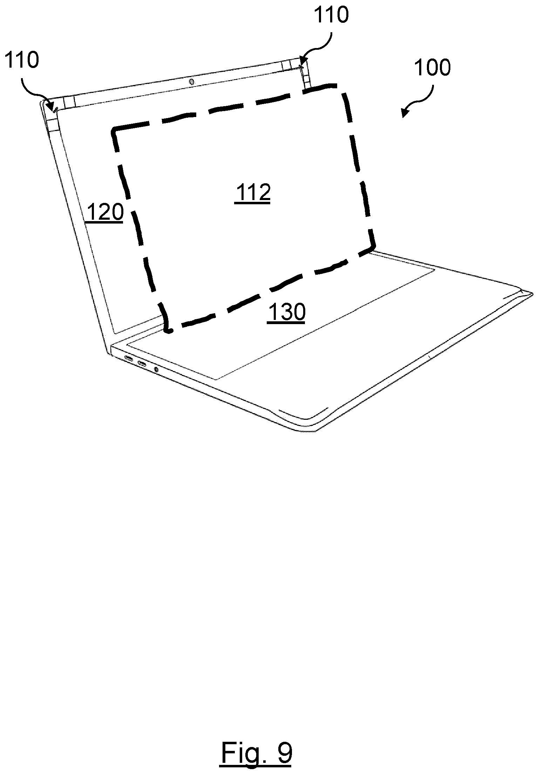

The display means 120 of the laptop device shows various content elements 121, which are the interactive components that the user may manipulate through touchless user input. These content elements 121 are dynamically associated with functions via the virtual function layer 112, which is not explicitly shown in this figure but is an underlying component of the system. The virtual function layer can be seen in figure 8 and 9. Further, the display means shows an exemplary virtual representation 122 of the input object 200.

The secondary display means 130, while present, is not the focus of this figure. Instead, the emphasis is on the interaction space 111 and the primary display means 120, demonstrating how the user can interact with the content elements 121 within the defined interaction space 111.

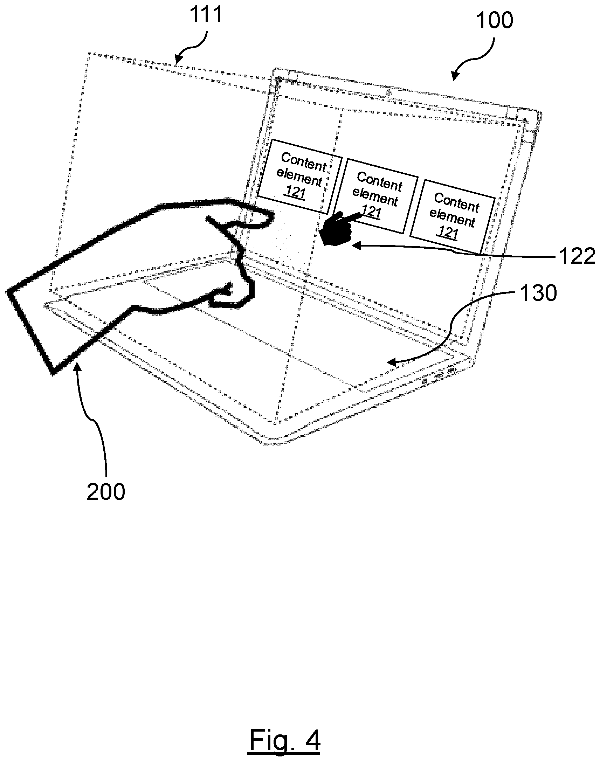

Figure 4 illustrates a second schematic usage scene of the method according to the embodiments of the present disclosure, with the data processing apparatus 100 being a laptop device, analogously to Figure 2 and Figure 3. In this figure, the interaction space 111 is again depicted with dotted lines, indicating the area within which the touchless interaction system 110 can detect and interpret user gestures.

Also in this figure, similar to figure 3, the display means 120 shows various content elements 121, which are the interactive components that the user can manipulate through gestures. These content elements 121 are dynamically associated with functions via the virtual function layer 112, which is not explicitly shown in this figure but is an underlying component of the system.

A notable addition in Figure 4 is the virtual representation 122 of the input object 200. This virtual representation 122 is displayed on the display means 120, providing visual feedback to the user about the position and movement of their input object 200 within the interaction space 111. This feedback enhances the user's ability to interact accurately with the content elements 121. The shape of the virtual representation 122 is a simplified depiction of a hand with a raised index finger.

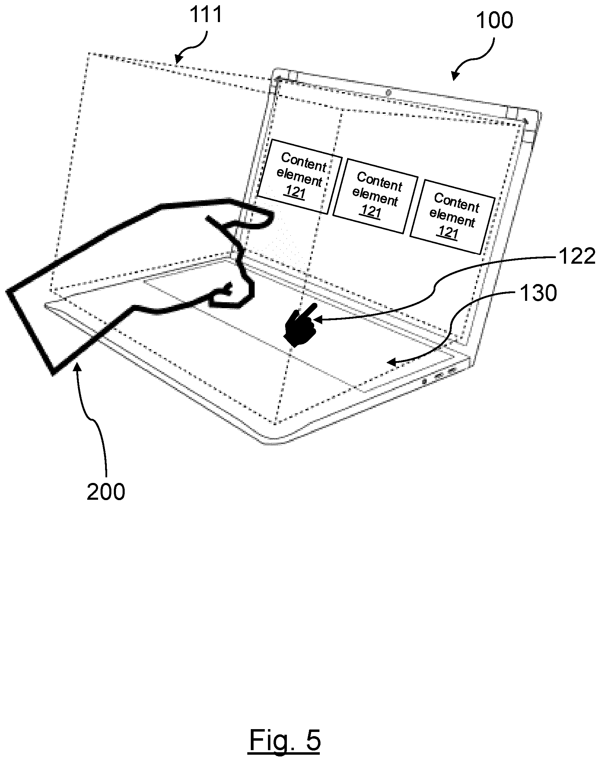

Figure 5 shows a third schematic usage scene of the method according to the embodiments of the present disclosure, with the data processing apparatus 100 being a laptop device, analogously to Figures 2, 3, and 4. In this figure, the interaction space 111 is depicted with dotted lines, indicating the area within which the touchless interaction system 110 can detect and interpret user gestures.

In contrast to Figure 4, the virtual representation 122 of the input object 200 is shown on the secondary display means 130 in Figure 5. This configuration supports the user by providing visual feedback about the position and movement of their input object 200 within the interaction space 111 without disturbing the user experience with regard to the content elements 121 shown on the primary display means 120. By displaying the virtual representation 122 on the secondary display means 130, the system ensures that the user's focus remains on the content elements 121, enhancing the overall user experience.

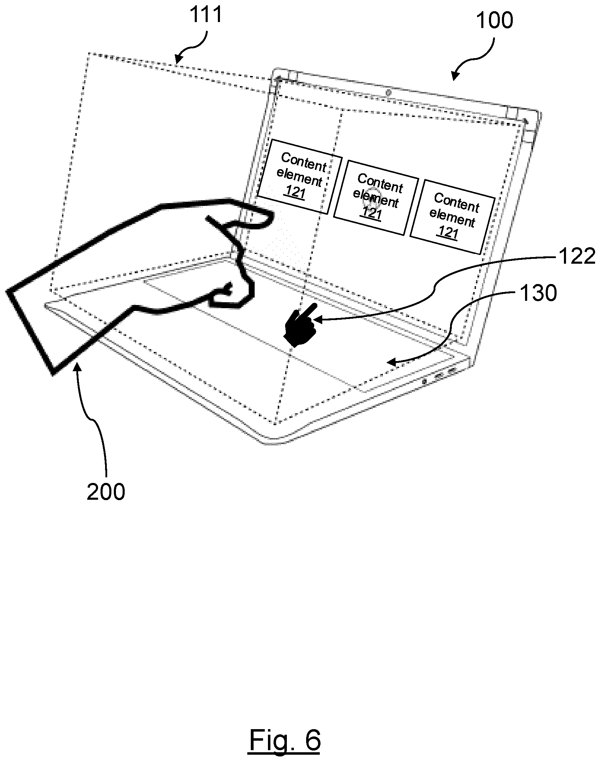

Figure 6 illustrates a fourth schematic usage scene of the method according to the embodiments of the present disclosure, with the data processing apparatus 100 being a laptop device, analogously to Figures 2, 3, 4, and 5. In this figure, the interaction space 111 is depicted with dotted lines, indicating the area within which the touchless interaction system 110 can detect and interpret user gestures.

Similar to Figure 5, the virtual representation 122 of the input object 200 is shown on the secondary display means 130 in Figure 6. This virtual representation 122 has the shape of a simplified user's hand, providing visual feedback about the position and movement of the input object 200 within the interaction space 111 without disturbing the user experience with regard to the content elements 121 shown on the primary display means 120. Additionally, compared to Figure 5, the display means 120 in Figure 6 shows a cursor corresponding to the virtual representation 122. This cursor is positioned directly on the display means 120, allowing the user to better recognize the position of pointing. The cursor shape is familiar to users, as it resembles the traditional cursor used in many computing environments, making it intuitive and easy to use.

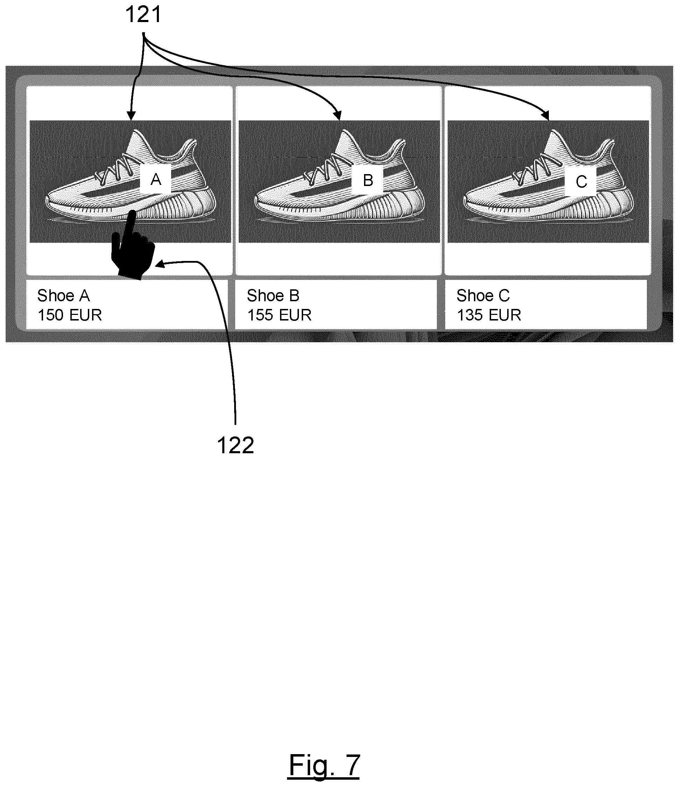

Figure 7 provides an exemplary illustration of a web search situation according to the embodiments of the present disclosure, with the data processing apparatus 100 being a laptop device. In this scenario, the user is engaged in a web search with the intention of purchasing shoes. The interaction space 111 is depicted with dotted lines, indicating the area within which the touchless interaction system 110 can detect and interpret user gestures.

The display means 120 shows the preliminary outcome of the user's search for shoes, displaying three shoes labeled A, B, and C as content elements 121. These content elements 121 represent the search results that the user can interact with through gestures.

The user can utilize the input object 200, such as their hand, to point, click, or rest for a predetermined time on one of the shoes, such as shoe A. The touchless interaction system 110 captures these gestures within the interaction space 111 and translates them into commands that interact with the virtual function layer 112, which is not explicitly illustrated in this figure.

When the user points, clicks, or rests on shoe A, a function provided by the virtual function layer 112 is triggered. This function may involve searching further for similar shoes or finding the same shoe at a lower price. The virtual representation 122 of the input object 200, which may be displayed on the secondary display means 130 or as a cursor on the primary display means 120, provides visual feedback to the user, enhancing the accuracy and intuitiveness of the interaction.

Figure 8 shows a first exemplary illustration of a virtual function layer according to the embodiments of the present disclosure, with the data processing apparatus 100 being a laptop device. Positioned on top of the content elements layer is the virtual function layer 112. This layer is a conceptual overlay that may be invisible to the user, yet it plays an important role in the interaction process. The virtual function layer 112 is responsible for associating specific functions with the content elements 121 based on the user's gestures. It acts as an intermediary, translating the user's touchless inputs into actions that affect the content elements 121 or perform actions and/or chains of actions based on the content elements 121.

Figure 9 provides a second exemplary illustration of a virtual function layer according to the embodiments of the present disclosure, with the data processing apparatus 100 being a laptop device. In this embodiment, the virtual function layer 112 is located essentially parallel and distanced to the display means 120 within the interaction space 111. Unlike in Figure 8, where the virtual function layer 112 is positioned directly on top of the content elements layer, here it is situated in the interaction space 111, maintaining an essentially parallel alignment with the display means 120. This layer may be invisible to the user.

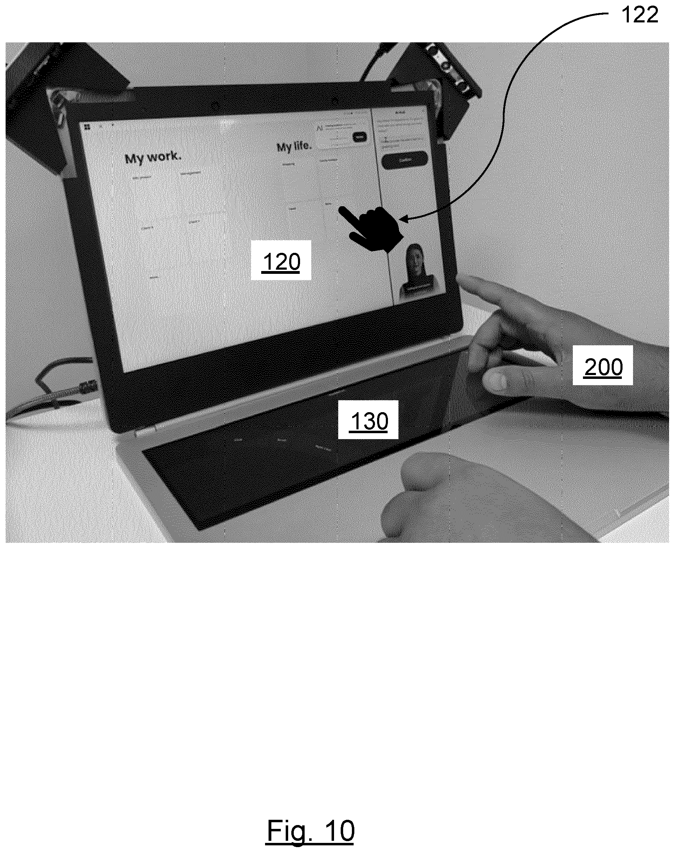

Figure 10 shows an image of a prototype of a data processing apparatus 100 according to the embodiments of the present disclosure. In this figure, the data processing apparatus 100 is configured as a laptop device, similar to the previous figures.

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Embodiments of the present disclosure may be implemented on a computer system. The computer system may be a local computer device (e.g., personal computer, laptop, tablet computer or mobile phone) with one or more processors and one or more storage devices or may be a distributed computer system (e.g., a cloud computing system with one or more processors and one or more storage devices distributed at various locations, for example, at a local client and/or one or more remote server farms and/or data centers). The computer system may comprise any circuit or combination of circuits. In one embodiment, the computer system may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), or any other type of processor or processing circuit. Other types of circuits that may be included in the computer system may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system may also include a display device, one or more speakers, and a keyboard and/or controller, which can include a mouse, trackball, touch screen, voice-recognition device, or any other device that permits a system user to input information into and receive information from the computer system.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the present disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the present disclosure comprise a data carrier having electronically readable control signals, which are capable of cooperating with a programmable computer system, such that one of the methods described herein is performed.

Generally, embodiments of the present disclosure can be implemented as a computer program product with a program code, the program code being operative for performing one of the methods when the computer program product runs on a computer. The program code may, for example, be stored on a machine-readable carrier.

Other embodiments comprise the computer program for performing one of the methods described herein, stored on a machine-readable carrier.

In other words, an embodiment of the present disclosure is, therefore, a computer program having a program code for performing one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitory. A further embodiment of the present disclosure is an apparatus as described herein comprising a processor and the storage medium.

A further embodiment of the present disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the present disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: data processing apparatus
- 110: touchless interaction system
- 111: interaction space
- 112: virtual function layer
- 120: display means
- 121: content element[s]
- 122: virtual representation
- 130: secondary display means
- 200: input object

## Claims

1. A computer-implemented method for touchless gesture interaction between a user and content elements (121) displayed on a display means (120), the method comprising:
generating (S101) a virtual function layer (112) associated with the content elements (121) displayed on the display means (120), the virtual function layer (112) being configured to associate functions with the content elements (121);
analyzing (S102) the content elements (121) to determine respective context information;
adding (S103) at least one function to the virtual function layer (112), the at least one function being associated with at least one of the content elements (121) based on the respective context information, the at least one function being associated with a respective touchless gesture input;
receiving (S104) a touchless gesture input, provided by the user using an input object (200), directed to the at least one content element (121); and
executing (S105) the at least one function associated with the received touchless gesture input based on the at least one content element (121) and based on the respective context information.

2. The method of claim 1, further comprising:
displaying a virtual representation (122) of the input object (200) being superimposed on the displayed content elements, and/or displaying the virtual representation (122) of the input object (200) by a secondary display means (130).

3. The method of claim 2, wherein the virtual representation (122) of the input object (200) is a schematic depiction of the input object (200) having a shape being different from the actual shape of the input object (200).

4. The method of any one of the preceding claims, further comprising:
providing visual feedback indicating a spatial relationship between the detected input object (200) and the virtual function layer (112), the visual feedback optionally being displayed by the display means (120) and/or by a secondary display means (130).

5. The method of claim 4, wherein providing visual feedback comprises generating a visual alert when the detected input object (200) approaches within a predetermined distance of the display means (120), the visual alert optionally including a change of color of the visual feedback.

6. The method of any one of claims 4-5, wherein the visual feedback includes an indication of available functions for a content element (121) when the user's input object (200) hovers over or near the content element (121).

7. The method of claim 6, wherein the indication of available functions includes displaying icons or text labels representing available functions near the content element (121), optionally wherein the method provides a tutorial mode that guides the user through the available touchless gesture inputs and their associated functions for different types of content elements (121).

8. The method of any one of the preceding claims, further comprising:
automatically targeting by redirecting an imprecise touchless gesture input to a nearest content element.

9. The method of any one of the preceding claims, wherein the functions added to the content elements (121) go beyond a function of clicking on the content elements (121), optionally wherein the functions include one or more of: accessing additional information related to the content element (121), performing a search based on the content element (121), sharing the content element (121) through a communication application, and/or saving the content element (121) for later reference.

10. The method of any one of the preceding claims, wherein analyzing the content elements (121) to determine respective context information and/or adding at least one function to at least one of the content elements (121) based on the respective context information is performed by at least one machine-learning model.

11. The method of any one of the preceding claims, wherein the virtual function layer (112) is adaptive and dynamically updates the functions and associated touchless gesture inputs based on changes in the content elements (121) displayed by the display means (120).

12. The method of any one of the preceding claims, wherein the touchless gesture inputs include one or more hand poses, one or more hand movements and/or one or more finger gestures, optionally a combination of one or more hand poses, one or more hand movements and/or one or more finger gestures, optionally wherein the touchless gesture inputs associated with functions are customizable by the user.

13. A data processing apparatus (100), preferably an electronic device, more preferably a computer device, more preferably a laptop computer comprising means for carrying out the method of any one of claims 1-12.

14. The data processing apparatus (100) of claim 13 being a laptop device comprising an upper portion and a lower portion each being hingedly connected to each other, wherein the upper portion includes the display means (120) and the lower portion includes a secondary display means (130).

15. A computer program or a computer-readable medium having stored thereon the computer program, the computer program comprising instructions which, when the computer program is executed by a data processing apparatus (100), cause the data processing apparatus (100) to carry out the method of any one of claims 1-12.
